# EUROPEAN PATENT APPLICATION

(11) **EP 4 844 617 A1**
(43) Date of publication of application: **25.11.2026**
(21) Application number: 26178975.4
(22) Date of filing: 15.05.2026
(51) Int. Cl.: G06F 21/64, G06F 11/28, G06F 11/30, G06F 21/57

(54) **COMPUTER SYSTEM, RECEIVING DEVICE, AND METHODS THEREIN, AND A SPACECRAFT**

(30) Priority: 19.05.2025 SE 2550491
(71) Applicant: Bruhnbruhn Innovation AB, 753 20 Uppsala (SE)
(72) Inventor: Petrik, Slavomir, 723 55 Västerås (SE); Solman Andersson, Alexander, 753 24 Uppsala (SE)
(74) Representative: Valea AB

(57) **Abstract**

A method performed by a computer system comprised in a spacecraft is provided.

The computer system establishes (202) a nominal software execution signature indicative of whether or not a software application has executed a set of software activities as intended. Establishing the nominal software execution signature is based on one or more first signatures obtained by obtaining one or more software activity signatures. Each respective software activity signature is obtained with proviso that a corresponding software activity of the set of software activities has successfully completed. The computer system provides (203) to a receiving device, the nominal software execution signature and data at least partly produced by the set of software activities.

## Description

### TECHNICAL FIELD

The disclosure relates to a computer system, receiving device and methods therein for handling a nominal software execution signature and data produced by a software application executed by the computer system is provided. In particular aspects, the receiving device validates data based on a nominal software execution signature established and provided by the computer system. A spacecraft comprising the computer system is also provided. Additionally, a computer program and a computer program medium are also provided by the disclosure.

### BACKGROUND

Spacecrafts are often controlled by a number of different software applications executing in a computer system. When operating in harsh environments as space, spacecrafts may be subject to space radiation, such as solar radiation. Space radiation often has transient and/or permanent effects on computer systems. For example, the radiation may cause a plurality of transistors of memory, or other circuitry to change state of the system which risk leading to error due to incorrect software execution. In other words, radiation may alter software execution and thereby produce incorrect data.

Hence, there is a need to improve handling of data originating from spacecrafts.

### SUMMARY

As part of developing embodiments herein, it has been identified that to mitigate at least some issues associated with radiation-related errors occurring in an environment of a spacecraft integrity protection mechanisms does not always provide sufficient protection. This is since due to the prevalence of radiation in space, not only data is at risk to be corrupted, but the software executing may also be at risk to execute incorrectly. Such incorrect execution would thereby produce incorrect data even if input data is correct and even if the data is not directly affected by the radiation. The incorrectly produced data may for example relate to incorrect calculations of environment modelling and/or incorrect calculations of coordinates and/or trajectories of objects based on satellite readings, which calculations may be incorrectly calculated due to incorrect software execution and not incorrect data input. As such errors cannot be detected after the data has been produced, at least not by the data alone. In particular, produced data can be within specified ranges and/or fulfill format requirements, but may still be incorrect due to effects of radiation on the executing software code.

An object herein is to improve handling of data originating from spacecrafts.

According to a first aspect of the disclosure, a method performed by a computer system comprised in a spacecraft for handling a nominal software execution signature and data produced by a software application executed by the computer system is provided. The computer system establishes the nominal software execution signature. The nominal software execution signature is indicative of whether or not the software application has executed a set of software activities as intended. The computer system establishes the nominal software execution signature by obtaining one or more first signatures and by establishing the nominal software execution signature based on the one or more first signatures. The computer system obtains the one or more first signatures by obtaining one or more software activity signatures. Each respective software activity signature is obtained with proviso that a corresponding software activity of the set of software activities has successfully completed with respect to a success criterion. The computer system provides to a receiving device, the nominal software execution signature and data at least partly produced by the set of software activities.

According to a second aspect of the disclosure, a computer system comprised in a spacecraft configured to handle a nominal software execution signature and data produced by a software application executed by the computer system is provided. The computer system is configured to establish the nominal software execution signature. The nominal software execution signature is indicative of whether or not the software application has executed a set of software activities as intended. The computer system is configured to establish the nominal software execution signature by obtaining one or more first signatures. The computer system is configured to establish the nominal software execution signature based on the one or more first signatures. The computer system is configured to obtain the one or more first signatures by obtaining one or more software activity signatures. Each respective software activity signature is obtained with proviso that a corresponding software activity of the set of software activities has successfully completed with respect to a success criterion. The computer system is configured to provide to a receiving device, the nominal software execution signature and data at least partly produced by the set of software activities.

According to a third aspect of the disclosure, a spacecraft is provided. The spacecraft comprises the computer system according to the second aspect.

According to a fourth aspect of the disclosure, a method performed by a receiving device for handling a nominal software execution signature and data produced by a software application executed by a computer system comprised in a spacecraft is provided. The receiving device receives from the computer system, the nominal software execution signature. The nominal software execution signature is indicative of whether or not the software application has executed a set of software activities as intended. The nominal software execution signature is established based on one or more first signatures, which one or more first signatures comprises one or more software activity signatures. Each respective signature is obtained with proviso that a corresponding software activity of the set of software activities has successfully completed with respect to a success criterion. The receiving device receives from the computer system, data at least partly produced by the set of software activities. The receiving device validates the received data based on the nominal software execution signature.

According to a fifth aspect of the disclosure, a receiving device configured to handle a nominal software execution signature and data produced by a software application executed by a computer system comprised in a spacecraft is provided. The receiving device is configured to receive from the computer system, the nominal software execution signature. The nominal software execution signature is indicative of whether or not the software application has executed a set of software activities as intended. The nominal software execution signature is established based on one or more first signatures, which one or more first signatures comprises one or more software activity signatures. Each respective signature is obtained with proviso that a corresponding software activity of the set of software activities has successfully completed with respect to a success criterion. The receiving device is configured to receive data at least partly produced by the set of software activities. The receiving device is configured to validate the received data based on the nominal software execution signature.

According to a sixth aspect of the disclosure, respective computer programs are provided for the methods of the first and third aspect. The computer programs comprise respective instructions which, when the respective program is executed by a respective processing circuitry, cause the respective processing circuitry to carry out the method according to the first or third aspect. The programs can be combined when suitable.

According to a fourth aspect of the disclosure, respective computer-readable storage mediums are provided for the methods of the first and third aspect. The computer-readable storage mediums comprise respective instructions which, when executed by a respective processing circuitry, cause the respective processing circuitry to carry out the method according to the first or third aspect. The mediums can be combined when suitable.

According to a fifth aspect of the disclosure, a spacecraft is provided. The spacecraft comprises the computer system according to the second aspect.

Since the nominal software execution signature is established based on the one or more first signatures which comprises the one or more software activity signatures, the data produced at least partly produced by the set of software activities can be validated with respect to whether or not corresponding software activities have successfully completed with respect to respective success criterion. Accordingly, incorrect execution of the software application will be noticed, and appropriate action can be taken such as discarding the data.

### BRIEF DESCRIPTION OF THE DRAWINGS

Examples are described in more detail below with reference to the appended drawings.
- **FIG. 1**: illustrates an example of a spacecraft and a computer system according to some embodiments.
- **FIG. 2**: illustrates a flow chart of a method performed by a computer system according to some embodiments.
- **FIG. 3**: illustrates a flow chart of a method performed by a receiving device according to some embodiments.
- **FIGS. 4-7**: illustrates example scenarios according to some examples.
- **FIG. 8**: illustrates an example of a computer system according to some embodiments.
- **FIG. 9**: illustrates an example of a receiving device according to some embodiments.

### DETAILED DESCRIPTION

Embodiments herein relate to establishing a nominal software execution signature as proof that data were produced by a nominal, i.e., intended, software execution. The nominal software execution signature can be used to validate the data, at least to prove that it was performed by a correct method. Signature as used embodiments herein may mean any suitable digital and/or cryptographical signature such as a checksum.

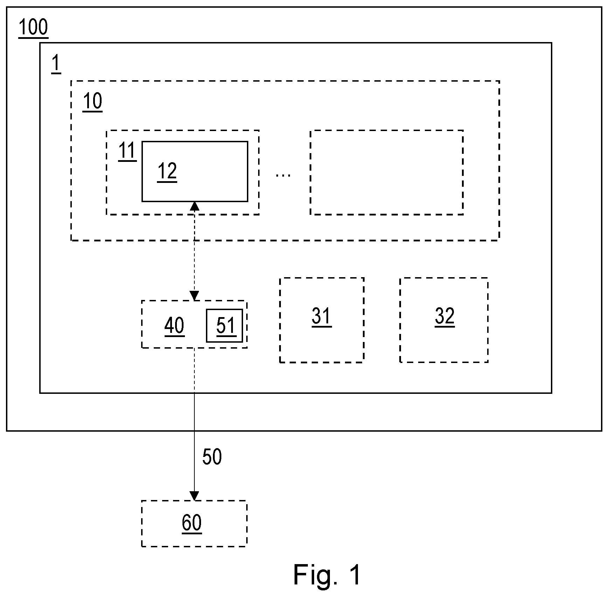

**FIG. 1** is an illustration according to some embodiments. Dashed boxes in FIG. 1 may be optional entities of embodiments herein.

FIG. 1 illustrates a **spacecraft 100.** The spacecraft 100 may be any suitable spacecraft such as a satellite, a rocket, or a space station.

FIG. 1 further illustrates a **computer system 1.** The computer system 1 is comprised in the spacecraft 100. The computer system 1 may be used for any suitable purpose, such as any one or more of: controlling the spacecraft 100, performing measurements, performing calculations, performing analyses of measurements, diagnostics of the spacecraft 100, and handling communications of the spacecraft 100.

In some embodiments, the computer system 1 may be configured to execute an **orchestrated software environment 10.** The orchestrated software environment 10 may be referred to as an orchestrated environment 10. Orchestrated environment allows for software to execute in isolation, may be possible to restart from known condition, and may therefore be suitable for execution of software applications in space as they can be easily restarted and fewer unknown errors may occur. In other words, embodiments herein do not require the orchestrated software environment 10 and shall not be limited to the use of such an environment, however, due to the prevalence of use of such environments, embodiments herein may include the use of such environment even if it is not necessarily required. In some embodiments, the orchestrated software environment 10 may comprise one or more virtual containers such as a **virtual container 11.** Only one container is illustrated in FIG. 1, but typically multiple containers may be used, each container being arranged for one or more separate software applications.

The computer system and/or the orchestrated software environment 10 is configured to execute one or more software applications. In particular, the one or more software applications may comprise a **software application 12,** e.g., executing as part of the virtual container 11 of the orchestrated software environment 11 and/or as a standalone user software, i.e., executing in user-space.

The computer system 1 may comprise a **software monitor unit 40.** The software monitor unit 40 may be a software application executed by the computer system 1. The software monitor unit 40 may be arranged to monitor the software application 12 for certain software activities and/or signatures provided by the software application 12 when the software application executes corresponding software activities. Embodiments herein may be executed at least partly by the software monitor unit 40. The software monitor unit 40 may execute as part of, or independent from, the orchestrated software environment 10, if such an environment is present in the computer system 1.

The computer system 1 may comprise one or more processing units, e.g., respectively comprising any suitable processing means such as a processor. The one or more processing units may comprise a **first processing unit 31** and/or a **second processing unit 32.** The one or more processing units, e.g., the first processing unit 31 and/or the second processing unit 32, may be or may comprise respective processors. Embodiments herein may be executed by any one or more of the one or more processing units, e.g., by being distributed thereon in any suitable manner. In other words, any one or more of: the orchestrated software environment 10, the virtual container 11, and the software application 12, the software monitor unit 40, may be distributed over any one or more of the one or more processing units. For example, the software application 12 may be executed by the first processing unit 31 and the software monitor unit 40 may be executed by the second processing unit 32. Distributing execution of different containers, the software monitor 40, and software applications such as the software application 12 may reduce risk of entities executing incorrectly at the same time.

The computer system 1 may be configured to, by the software application 12, produce data and to establish, e.g., by the software monitor 40, a **nominal software execution signature 50** for validating that said data was produced without incorrect software execution.

The nominal software execution signature 50 may be any suitable indicator for whether or not the data was produced by incorrect or correct software execution.

As a non-limiting example, the nominal software execution signature 50 is a digital and/or cryptographic signature such as a checksum, and in some embodiments, a Fletcher-16 checksum.

The software application 12 may be configured to execute a set of software activities. The set of software activities may be used-defined and/or may comprise any suitable logical block of computation to be performed by the software application 12. The software application 12 may be configured to produce the data at least partly by the set of software activities. The set of software activities may be any suitable code or function or other executable software activity. The set of software activities may be predefined and/or indicated to both the computer system 1 and the receiving device 60 in any suitable manner, e.g., by respective configurations. The nominal software execution signature 50 may be established for validation of the data, such that it can be validated that the data was produced by the set of software activities. In particular embodiments, the nominal software execution signature 50 is established based on **one or more first signatures 51.** The one or more first signatures 51 may at least be indicative of which software activity of the set of software activities has successfully completed by the software application 12. The computer system 1 is configured to provide the nominal software execution signature 50 and produced data for validation of the data, such as to a **receiving device 60.** The receiving device 60 may be configured to validate the data produced by the computer system 1 based on the nominal software execution signature 50. The receiving device 60 may be arranged as part of a ground control center. The receiving device 60 may be any suitable device, such as a computer system. The receiving device 60 may be preconfigured with a correct signature for validating the nominal software execution signature 50, and/or the receiving device 60 may be configured to establish a correct signature for the nominal software execution signature 50, e.g., in the same or similar manner as the computer system 1, is establishing the nominal software execution signature 50, assuming that all software activities of the set of software activities successfully completed as intended.

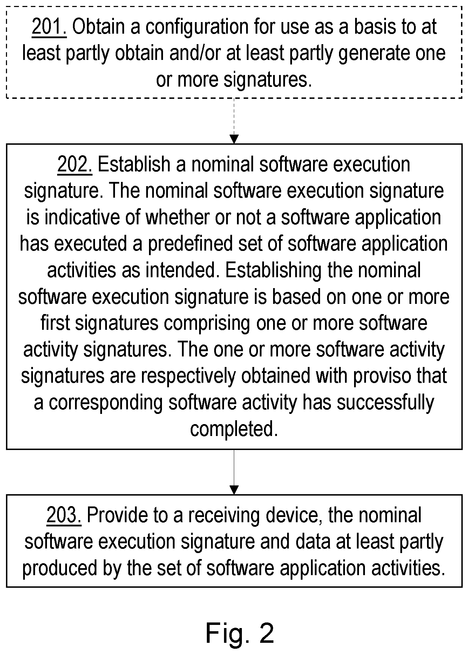

**FIG. 2** illustrates a flow chart of a method performed by the computer system 1 comprised in the spacecraft 100 for handling the nominal software execution signature 50 and data produced by the software application 12 executed by the computer system 1. In some embodiments, the software application 12 is executed at least partly by the first processing unit 31 of the computer system 1. At least partly as used herein may mean that while the first processing unit 31 may solely execute the software application 12, the software application 12 may also be distributed and executed by multiple processing units of the one or more processing units. The method herein may be executed by a different processing unit as the software application 12, such as executed at least partly by the second processing unit 32 of the computer system 1. The method may comprise any one or more of the following Actions 201-203, in any suitable order. Dashed boxes in FIG.2 may indicate optional actions.

**Action 201.** In some embodiments, the computer system 1 obtains a configuration. The configuration may be indicative of one or more signatures of embodiments herein and/or may be indicative of how to establish or generate one or more signatures of embodiments herein. For example, the configuration may be indicative of software activity signatures for the set of software activities such that corresponding software activity signature can be obtained when respective software activity has completed successfully.

Additionally or alternatively, the configuration may be partly or fully be any one or more out of: predefined, obtained from any suitable storage media, and provided by the receiving device 60.

**Action 202.** The computer system 1 establishes the nominal software execution signature 50. The nominal software execution signature 50 is indicative of whether or not the software application 12 has executed the set of software activities as intended. The computer system 1 establishes the nominal software execution signature 50 by obtaining the one or more first signatures 51, and establishing the nominal software execution signature 50 based on the one or more first signatures 51. The computer system 1 obtains the one or more first signatures 51 by obtaining one or more software activity signatures. Each respective software activity signature is obtained with proviso that a corresponding software activity of the set of software activities has successfully completed with respect to a success criterion. The success criterion for each respective software activity may be predefined or defined by a configuration such as the configuration of Action 201. In particular, the success criterion may comprise a condition that a corresponding software activity shall be completed before a set completion time and/or within a set time period. The set completion time and/or within the set time period may be defined by any suitable means, e.g., dynamically defined or predefined, such as based on at least one of: by a predefined configuration, by predefined heuristics, by a calculation from an actual operation status and/or conditions, by deadlines for delivering signatures per activity, predefined trigger points, or start of the application 12, e.g., wherein the deadlines are associated with predefined time periods. Additionally or alternatively, the success criterion may be that data produced or used by a software activity fulfils certain quality criteria, e.by g., being within a set interval. The success criterion may be different for each software activity such as a respective deadline for when each activity shall have completed.

The one or more activity signatures may be predefined and/or part of a configuration such as the configuration of Action 201. The configuration may be shared with the receiving device 60.

The one or more software activity signatures may be obtained by being provided by the software application 12 to the monitor unit 40. The monitor unit 40 may be arranged to monitor the software application 12. The computer system 1 may establish the nominal software execution signature 50 by the monitor unit 40. The software application 12 may for example provide a first software activity signature in response to a first success criterion being fulfilled. In other words, the software application 12 may determine whether or not the first success criterion is fulfilled. Additionally or alternatively, the monitor unit 40 may discard the first software activity signature if the monitor unit 50 determines that the first success criterion has not been fulfilled. In other words, the monitor unit 40 may determine whether or not the first success criterion is fulfilled.

In some embodiments herein, the one or more first signatures 51 may be at least partly obtained and/or at least partly generated, from and/or based on, the configuration discussed in Action 201. Additionally or alternatively, the one or more first signatures 51 may be predefined.

In other words, the one or more first signatures 51 may be predefined, but may only be used to establish the nominal software execution signature 50 if corresponding software activities is completed before the set completion time and/or within the set time period. If the corresponding software activities are completed later or not at all, this needs to be indicated by the nominal software execution signature 50 such that it can be detected that some incorrect software execution has occurred, e.g., when validated by the receiving device 60.

In some embodiments, the computer system 1 obtains the one or more first signatures 51 by obtaining an initial signature. The initial signature may be predefined or generated. The initial signature may be associated with any one or more of: the software application 12, a distinct execution of the software application 12, input data to the software application 12, a user, e.g., a user account, or the computer system 1. In other words, the initial signature may be a predefined context and may be used to distinguish a certain instance of software execution from others. In particular, the initial signature may be a signature based on input data used during software execution, e.g., of the software application 12. The initial signature may be arranged to distinguish between different software executions such as in terms of different input data by the same user. For example, if the software application 12 relates to certain data which can differ between execution of the software application 12, such data can be used as a basis for the initial signature, e.g., a certain sensor data obtained by the software application 12 or input data to the software application 12. As a concrete example, taking picture by a camera e.g., using different settings for exposure time, filters, etc. done by the same user, may be used as a basis for the initial signature.

In some embodiments, the computer system 1 obtains the one or more first signatures 51 by obtaining a signature associated with a user, e.g., a user account, of the computer system 1. The user signature may be predefined and/or user-specific. The user signature may be used to ensure that the software execution is performed by a certain user, e.g., to distinguish from other software execution.

The user signature may in some embodiments be arranged at least partly for secure handling of data and/or the nominal software execution signature 50. For example, a different user using the same camera of the spacecraft 100 to take a picture, e.g., when the spacecraft 100 is a satellite used at least partly for obtaining images. By the use of the user signature it the different pictures can be differentiated such that the users can verify that they got their respective pictures, and not somebody else's pictures even if the settings of camera, e.g., by input data and/or initial signature, would be the same or similar for all users.

In some embodiments, the computer system 1 may establish the nominal software execution signature 50 by establishing a preliminary software execution signature based on the one or more activity signatures, and establishing the nominal software execution signature 50 based on the preliminary software execution signature. The preliminary software execution signature may be one of the one or more first signatures 51. The computer system 1 may further establish the nominal software execution signature 50 based on the initial signature. Additionally or alternatively, the computer system 1 may further establish the nominal software execution signature 50 based on the user signature.

In some embodiments, the computer system 1 may establish the nominal software execution signature 50 at least partly dependent of an order of obtaining at least part of the one or more first signatures 51. In some embodiments, the computer system 1 may establish the nominal software execution signature 50 at least partly independent of an order of obtaining at least part of the one or more first signatures 51. In particular embodiments, establishing the nominal software execution signature 50 is based on a position-independent or position dependent checksum such as a Fletcher-16 checksum. Some or all of the software activities of the set of software activities may be needed to be performed in a certain order, e.g., partial order or total order, reflected by a requirement on such ordering of the one or more first signatures 51, e.g., in what order they are to be added to the nominal software execution signature 50 and/or processed by suitable operators to establish the nominal software execution signature 50. Additionally or alternatively, some or all of the software activities of the set of software activities may have no requirement on the ordering, e.g., when the set of software activities relate to activities which can be performed completely in parallel.

The computer system 1 may, by or based on establishing the nominal software execution signature 50, generate one or more software execution signatures for validating data produced by the computer system 1.

**Action 203.** The computer system 1 provides to the receiving device 60, the nominal software execution signature 50 and data at least partly produced by the set of software activities. Providing as used herein may mean that the computer system 1 transmits the nominal software execution signature 50 and the data to the receiving device 60 using any suitable wireless communication, such as any suitable radio communication means such as a radio communication based on a predefined configuration. A wired connection for providing the nominal software execution signature 50 and the data may also be possible, e.g., if the receiving device 60 would be part of the spacecraft 100 and/or is physically interfacing with the spacecraft 100. As an alternative, the software execution signature 50 and data can also be stored on a storage medium and physically transferred and provided to the receiving device 60.

In some embodiments transmissions as part of Action 203 may be performed using any suitable data link, and/or stored on the computer system 1 for later transmission and/or processing.

The nominal software execution signature 50 can be validated by the receiving device 60 to determine whether or not the data was produced with incorrect software execution. If the receiving device 60 can establish the same nominal software execution signature 50, then the data is deemed to be produced without incorrect software execution and thereby, in this regard, the data can be trusted.

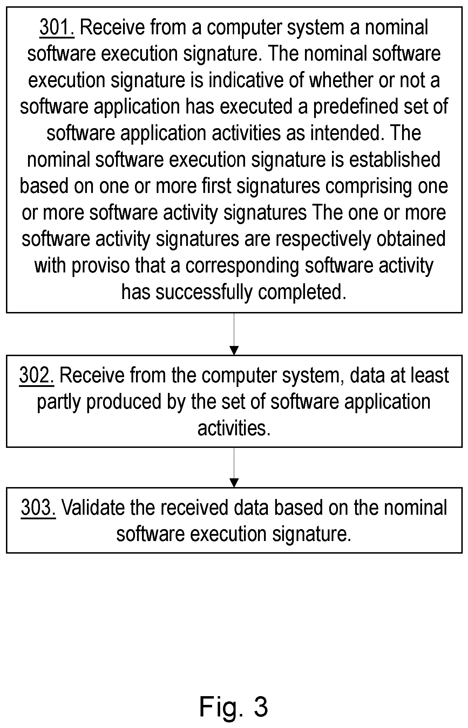

**FIG. 3** illustrates a flow chart of a method performed by the receiving device 60 for handling the nominal software execution signature 50 and data produced by the software application 12 executed by the computer system 1 comprised in the spacecraft 100. All features discussed with regards to Actions 201-203 apply for the following method in a corresponding manner. The method may comprise any one or more of the following Actions 301-303, in any suitable order. Dashed boxes in FIG.2 may indicate optional actions.

**Action 301.** The receiving device 60 receives from the computer system 1, the nominal software execution signature 50. The nominal software execution signature 50 is indicative of whether or not the software application 12 has executed the set of software activities as intended. The nominal software execution signature 50 is established based on the one or more first signatures 51 as discussed in Action 202. The one or more first signatures 51 comprises the one or more software activity signatures. Each respective software activity signature is obtained with proviso that a corresponding software activity of the set of software activities has successfully completed with respect to a success criterion, e.g., the same as in action 202 such as being predefined and/or defined by a configuration.

**Action 302.** The receiving device 60 received from the computer system 1, data at least partly produced by the set of software activities. Action 302 may be performed with Action 301, i.e., the data and the nominal software execution signature 50 may be received at the same time, e.g., as part of the same transfer.

**Action 303.** The receiving device 60 validates the received data based on the nominal software execution signature 50.

The receiving device 60 may be configured with a correct signature if the software execution would be correct, e.g., with the nominal software execution signature 50. Additionally or alternatively, the receiving device 60 may validate the received data based on the nominal software execution signature 50 by establishing a correct signature, e.g., based on a set of activity signatures corresponding to a situation where all of the set of software activities completed successfully with regards to the respective success criterion.

The one or more activity signatures may be predefined and/or obtained as part of a configuration, e.g., shared with the computer system 1.

In particular, the receiving device 60 may validate the received data based on the nominal software execution signature 50 by recalculating the nominal software execution signature 50, assuming that all of the success criterion are fulfilled, e.g., that all of the set of software activities complete within their set deadlines. The recalculated nominal software execution signature may then be compared with the nominal software execution signature 50, and if they match, then it is validated the software application 12 has performed the set of software activities with regards to the success criteria, e.g., within the set deadlines, or at least that such activities have been performed with a high probability and/or reliability. Hence, with regards to correct execution of the software application 12, the data may be trusted.

Correct versions of the nominal software execution signature 50 and/or the one or more first signatures 51 may be stored in a configuration and/or configured with the receiving device 60, and may be used to validate the received data based on the nominal software execution signature 50. Correct versions of the nominal software execution signature 50 and/or the one or more first signatures 51 may be the nominal software execution signature 50 and/or the one or more first signatures 51 in Action 202, when executing without any incorrect execution and fulfilling all success criteria and optionally accounting for the initial signature and/or the user signature.

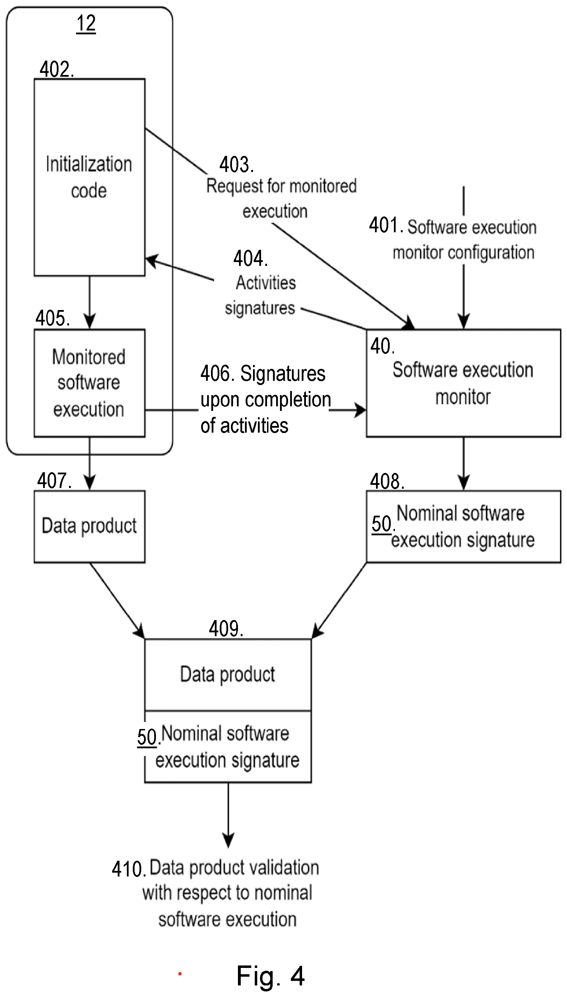

**FIGS. 4-7** illustrates different example scenarios of embodiments herein and may Illustrate concrete examples of the methods described above.

**FIG. 4** illustrates an example scenario where the monitor unit 40 and the software application 12 of the computer system 1 performs at least some embodiments herein. The below Actions may be combined with any of the above-mentioned Actions in any suitable manner.

**Action 401.** Configure the monitor unit 40 with the initial signature, the user signature, and the one or more software activity signatures.

**Action 402.** The software application 12 initializes the monitoring by an initialization code.

**Action 403.** The software application 12 requests initialization of monitored execution of the software application 12 by the monitor unit 40. For example, an initialization code of the monitored software application 12 may request to initialize software execution monitoring by the monitoring unit 40 for an upcoming "monitored software execution" with X software execution activities as part of the set of software activities. The total number of activities, X, depends on the design of the monitored software application 12. For each software activity, a deadline in milliseconds (ms) since the start of the monitored software execution may be specified, e.g., as par the success criterion for each software activity.

**Action 404.** The monitor unit 40 returns a unique signature for each of the X-requested software activities. In other words, the one or more software activity signatures may be provided to the software application 12 by the monitor unit 40.

**Action 405.** Monitored software execution proceeds, i.e., where the set of software activities are executed.

**Action 406.** The monitored software application 12 returns respective activity signatures upon completing each software execution activity. The monitor unit 40 may verify the correctness of the respective signatures and that the signature has been returned before the user-defined deadline for the given activity.

**Action 407.** Data is produced by the software application 12 as a result of the set of software activities.

**Action 408.** The nominal software execution signature 50 is established, e.g., as part of Action 202, by the software monitor, e.g., based on the received signatures of Action 406 and based on the initial signature and the user signature. The Nominal software execution signature 50 is produced only in case all signatures of the software execution activities were returned by the monitored software application 12 before their user-specified deadlines.

**Action 409.** At the end of the monitored software execution in the software application 12, the nominal software execution signature 50 is attached to the data product produced by the software execution.

**Acton 410.** The consumer of the data product, e.g., the receiver device 60, may validate that the data product has been produced by nominal software execution. The monitored software execution in this method is considered nominal if all activities, i.e., the set of software activities, have completed before their respective deadlines.

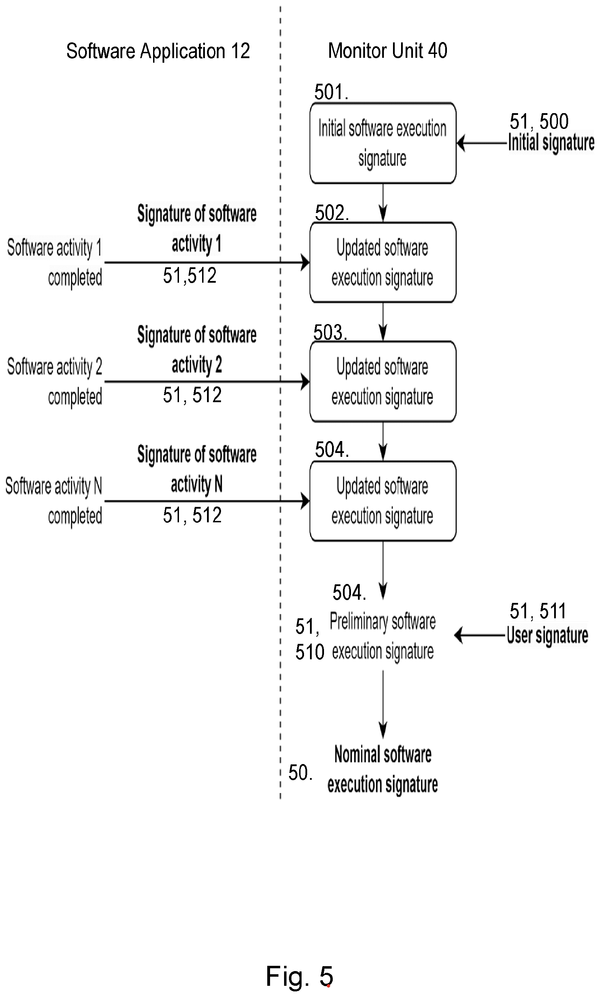

**FIG. 5** illustrates an example scenario where the monitor unit 40 and the software application 12 of the computer system 1 performs at least some embodiments herein, e.g., in combination with the example scenario of FIG. 4 and/or any of the above-mentioned Actions.

Establishing the nominal software execution signature 50 may comprise calculating the nominal software execution signature 50, e.g., as part of any of Actions 202, 408-409, and will be further exemplified below and may comprise any one or more of the following Actions.

### Action 501.

The initial signature may be obtained, e.g., as provided by a user or configuration or may be predefined. The initial signature may be part of the one or more first signatures 51 discussed above and may be exemplified in FIG. 5 as an **initial signature 500.**

The initial signature 500 may be selected to have a certain meaning, such as a certain system fingerprint of different unique combinations of the system and/or execution context and/or any suitable input data. The initial signature 500 may be generated or selected by a user. The initial signature 500 may be arranged to be a seed for calculating a **preliminary software execution signature 510** which will further be discussed below.

With each passing software activity of the set of software activities, the monitored software application 12 may contribute the signature of the completed activity. The monitor unit 40 may verify the correctness of the respective activity signature and that the signature has been contributed before its pre-defined deadline since the start of the monitored software execution. This is exemplified by Actions 502-504 below.

**Action 502.** A first software activity 1 of the set of software activities completes. A first software activity signature corresponding to the first software activity 1 is provided to the monitor unit 40. The first software activity signature is part of the one or more activity signatures, here exemplified as **one or more activity signatures 512.** The one or more activity signatures 512 are part of the one or more first signatures 51, used for establishing the nominal software execution signature 50.

**Action 503.** A second software activity 2 of the set of software activities completes. A second software activity signature of the one or more activity signatures 512 corresponding to the second software activity 2 is provided to the monitor unit 40.

**Action 504.** An N:th software activity N of the set of software activities completes. N may be any suitable number e.g., defining a quantity of the set of software activities. An N:th software activity signature of the one or more activity signatures 512 corresponding to the N:th software activity N is provided to the monitor unit 40. Corresponding Actions for numbers 3 to N may also apply.

**Action 505.** For every above action, a signature is updated, and when all software activities 1, 2, ..., N are completed, the preliminary software execution signature 510 is calculated. The preliminary software execution signature 510 may be part of the one or more first signatures 51. At this point, the preliminary software execution signature 510 may be updated by further adding the user signature here exemplified as a **user signature 511.** A user may select the user signature 511 based on the user's identity and/or an operational phase. Alternatively, the user signature 511 is a generated signature of the user, e.g., private or public key, or a generated signature associated with a user account of the user.

The nominal or preliminary software execution signatures 50, 510 of FIG. 5 may typically be updated, i.e., established, in any suitable order. As one example, the monitored software application 12 contributes the activity signatures 512 of completed software activities in an order that does not matter, i.e., Actions 502, 503, 504, can take place in any order or in parallel. The set of software activities may be completed in any order, resulting in the same preliminary software execution signature 510, and in the same nominal software execution signature 51. However, as will be discussed in further example scenarios, an order such as a total or partial ordering may also need to be imposed on the set of software activities in when they are completed.

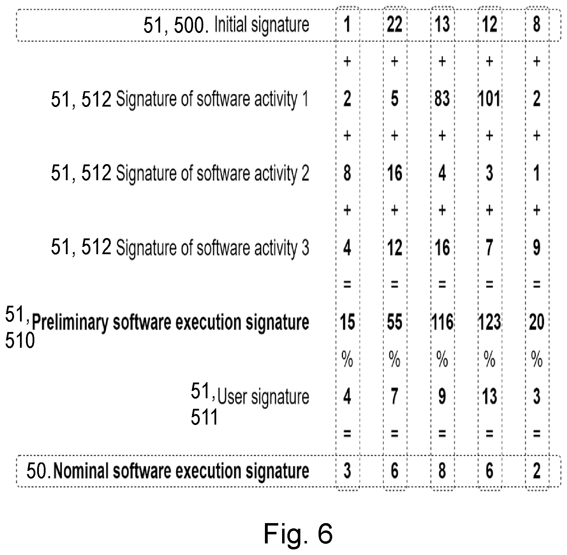

**FIG. 6** illustrates an example scenario of how the nominal software execution signature 50 may be established, e.g., as part of Action 202 and/or as part of any other one or more Actions above. In this example scenario, a position-independent checksum is used to calculate the nominal software execution signature 50, referred to below as NS. NS may be a byte string and said byte string may be L bytes long. An addition operation, i.e., plus, as used herein is commutative, so the order of contribution of the software activity signatures 512 does not matter. The addition is done on a byte basis, i.e., bytes at the same position (n) in the added signatures are summated.

In the example scenario of FIG. 6, the following definitions apply:
- ISₙ is the initial signature 500.
- USₙ is the user signature 511.
- S1ₙ, S2ₙ, ..., and S(N)ₙ are the one or more software activity signatures 512.
- PSₙ is the calculated preliminary software execution signature 510.
- NSₙ is the calculated nominal software execution signature 50.
- X is the total number of software activities of the set of software activities.
- n is a number from 0 to L-1, i.e., a length of the signature 50.
- % is the sign for modulus operation, i.e., remainder after division.

The preliminary software execution signature 510 may be calculated by: PSₙ = ISₙ + S1ₙ + S2ₙ + S(X)ₙ. In other words, the preliminary software execution signature 510, PSₙ may be calculated by addition of the one or more software activity signatures 512 and the initial signature 500.

The nominal software execution signature 50 may thereby, e.g., as part of establishing the nominal software execution signature 50 of Action 202, be calculated by: NSₙ = PSₙ % USₙ

In other words, the nominal software execution signature 50, NSₙ , may be calculated by the preliminary software execution signature 510 modulo the user signature 511. In the example scenario of FIG. 6, calculation of the nominal software execution signature is for a signature of length L = 5 with three software activities, i.e., X = 3, of the set of software activities. Each of the one or more first signatures 51 may have been quantified as an example for calculating the nominal software execution signature 50. In the example scenario of FIG. 6, the calculation may be order-independent, i.e., the order of contributed signatures of software activities 52 does not matter meaning that the order in which the monitored software application 12 contributes signatures of completed software activities does matter in this example. However, in scenarios where a set of software activities need to be completed according to a certain order such as a predefined order. Each unique order of contributing the software activity signatures for calculating the preliminary software execution signature 510 may need to result in a different preliminary software execution signature.

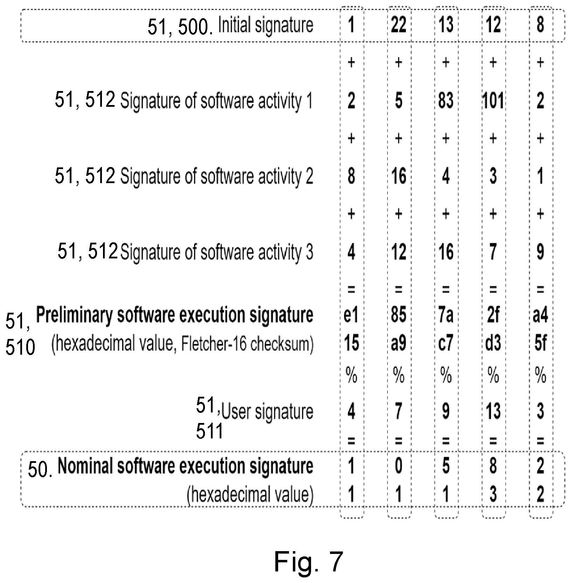

**FIG. 7** illustrates an example scenario of how the nominal software execution signature 50 may be established, e.g., as part of Action 202, when ordering is of interest, e.g., a partial or total order of the set of software activities. For this example scenario, a Fletcher-16 checksum may be used to calculate a per-byte preliminary checksum forming the preliminary software execution signature 510. The rest of the calculation stays the same as discussed with regards to the example scenario described in FIG. 6 above. The property of the Fletcher-16 checksum is that a different order of contributed 1-byte values during the calculation of the checksum results in the different 2-byte checksum. Since the calculated preliminary software execution signature 510 will have two bytes, the user signature 511 will be used on a per-byte basis on both bytes. The resulting nominal software execution signature 50 will consist of 2x L bytes.

While using Fletcher-16 checksum is one option for achieving a calculation of an order-dependent nominal software execution signature 50, i.e., where an order of contributed signatures 512 of software activities matters, it should be noted that any suitable manner of achieving an order-dependent signature apply to embodiments herein.

### Validation of the nominal software execution signature

Before using the data product, i.e., the data produced at least partly by the set of software activities, a consumer of the data product such as the receiving device 60.

Additionally, or alternative to Action 303, the receiving device 60 may validate the data product by recalculating the nominal software execution signature 50, assuming that all of the success criteria are fulfilled, e.g., that all of the set of software activities complete within their set deadlines. For recalculating the nominal software execution signature 50, the consumer of the data product may need to obtain the initial signature 500 and the user signature 511, if used. Those may be secret signatures only known by a particular user or by the consumer such as the receiving device 60. The signatures 512 of the software activities may be announced to the consumer of the data product by an operator of the monitored software application 12 and/or may be predefined and/or may be stored in a shared configuration.

If the nominal software execution signatures 50 match, improved reliability that the data product has been produced by the nominal execution of the monitored software has been achieved - i.e., it can be concluded with a high probability that the software has not been altered by random software failure, like for example, bit-flips caused by the space radiation to software executing the nominal execution producing the data. In embodiments herein, such improved reliability may be sufficient to trust the data produced by the software application 12.

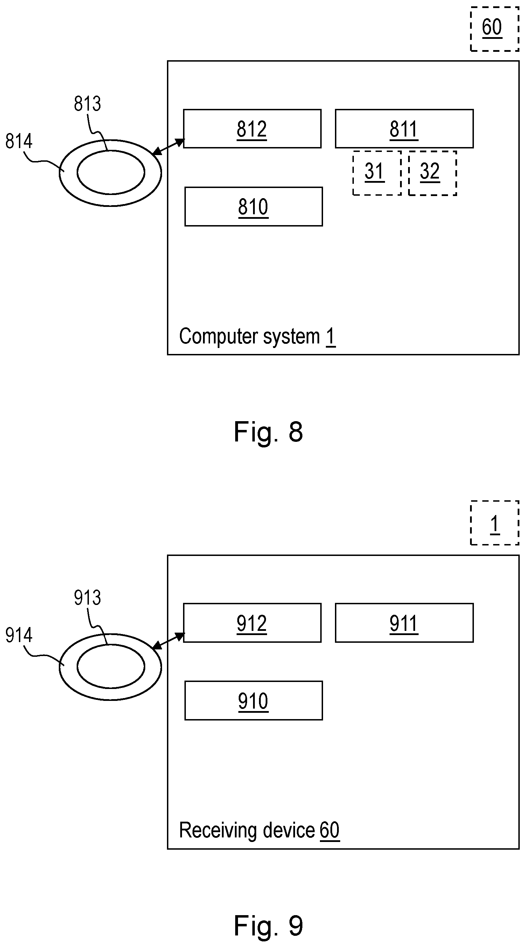

**FIG. 8** illustrates an example of the computer system 1 according to some embodiments. As discussed above, the computer system 1 is comprised in the spacecraft 100. As discussed above, the computer system 1 may be configured to operate in the spacecraft 100 in particular when the spacecraft 100 is arranged in space, e.g., in orbit around Earth. Several embodiments are comprised herein and it should be noted that the examples and embodiments herein are not mutually exclusive. One or more embodiments may be combined, where applicable. The computer system 1 may comprise an **input and output interface 810.** The input and output interface 810 may comprise a receiver, e.g. wired and/or wireless, not shown and a transmitter, e.g. wired and/or wireless, not shown, e.g., for communication with the receiving device 60 and/or the spacecraft 100.

The embodiments herein, in particular as discussed below, may be implemented through a **processing circuitry 811** comprised in the computer system 1, and as depicted in Fig. 8, e.g., together with computer program code for performing the functions and actions of the embodiments herein. The processing circuitry 811 may comprise any suitable processing means such as the one or more processing units, e.g., the first processing unit 31 and/or the second processing unit 32. The processing circuitry 811 may be or may comprise a processor. Any one or more embodiments herein, such as the method above, may be performed by the processing circuitry 811.

The computer system 1 is configured to handle the nominal software execution signature 50 and data produced by the software application 12 executed by the computer system 1. The computer system 1 is configured to establish the nominal software execution signature 50. The nominal software execution signature 50 is indicative of whether or not the software application 12 has executed a set of software activities as intended. The computer system 1 is configured to establish the nominal software execution signature 50 by obtaining the one or more first signatures 51. The computer system 1 is configured to establish the nominal software execution signature 50 based on the one or more first signatures 51. The computer system 1 is configured to obtain the one or more first signatures 51 by obtaining the one or more software activity signatures. Each respective software activity signature is obtained with proviso that a corresponding software activity of the set of software activities has successfully completed with respect to the success criterion. The computer system 1 is configured to provide to the receiving device 60, the nominal software execution signature 50 and data at least partly produced by the set of software activities.

In some embodiments, the computer system 1 is configured to obtain the one or more first signatures 51 by obtaining a predefined initial signature. The initial signature may be predefined and/or generated to be associated with any one or more of: the software application 12, a distinct execution of the software application 12, a user, or the computer system 1. Additionally or alternatively, the computer system 1 may be configured to obtain a signature associated with a user of the computer system 1.

In some embodiments, the computer system 1 is configured to establish the nominal software execution signature 50 by establishing the preliminary software execution signature based on the one or more activity signatures, and establishing the nominal software execution signature 50 based on the preliminary software execution signature and at least one of:
- the initial signature associated with any one or more of: the software application 12, a distinct execution of the software application 12, a user, or the computer system 1, and
- the user signature associated with the a user.

In some embodiments, the computer system 1 is configured to establish the nominal software execution signature 50 at least partly dependent of an order of obtaining at least part of the one or more first signatures 51. Additionally, or alternatively, the computer system 1 may be configured to establish the nominal software execution signature 50 at least partly independent of an order of obtaining at least part of the one or more first signatures 51.

The computer system 1 may be configured to establish the nominal software execution signature 50 based on a position-independent checksum.

In some embodiments, at least one success criterion of the respective success criteria comprises a condition that a corresponding software activity shall be completed before a set completion time and/or within a set time period .

In some embodiments, the one or more software activity signatures are provided by the software application 12 to the software monitor unit 40. The software monitor unit 40 may be arranged to monitor the software application 12. The computer system 1 may establish the nominal software execution signature 50 by the monitor unit 40.

The computer system 1 may further comprise respective a **memory 812** comprising one or more memory units. The memory 812 comprises instructions executable by the processing circuitry 811 in the computer system 1. The memory 812 may be used to store instructions, data, configurations, references, and applications to perform the methods herein when being executed in the computer system 1.

The computer system 1 may comprise the processing circuitry 811 and the memory 812. Said memory 812 may comprise instructions executable by said processing circuitry 811 whereby said computer system 1 is operative to perform any of the methods herein.

In some embodiments, a **computer program 813** which may also be referred to as a computer program product, may comprise instructions, which, when executed on the computer system 1 such as the processing circuitry 811, may cause the computer system 1 or a processor thereof, such as the processing circuitry 811, to carry out the method according to any of the above-mentioned embodiments.

In some embodiments, **a computer-readable storage medium 814** is comprised in the computer system 1. The storage medium 814 may have stored thereon a computer program, e.g., the program 813, which comprises instructions which, when executed by the computer system 1 such as the processing circuitry 811, cause the computer system 1 such as the processing circuitry 811 to carry out the method according to any of the above-mentioned embodiments.

The processing circuitry 811 may be configured to execute program code, e.g., the program 813, stored in memory such as the memory 812 and/or storage medium 814, which may include one or several types of memory such as read-only memory (ROM), random-access memory (RAM), cache memory, flash memory devices, optical storage devices, etc. Program code stored in memory includes program instructions for executing protocols and/or actions for the spacecraft 100.

**FIG. 9** illustrates an example of the receiving device 60 according to some embodiments. The receiving device 60 may be arranged in any suitable location, but may typically be arranged on Earth, such as part of a ground control center in communication with the spacecraft 100. As discussed above, the receiving device 60 may be configured to validate data from the spacecraft 100 based on the nominal software execution signature 50. The data to be validated may be obtained by the computer system 1 comprised in the spacecraft 100, in particular when the spacecraft 100 is arranged in space, e.g., in orbit around Earth. Several embodiments are comprised herein and it should be noted that the examples and embodiments herein are not mutually exclusive. One or more embodiments may be combined, where applicable. The receiving device 60 may comprise an **input and output interface 910.** The input and output interface 910 may comprise a receiver, e.g. wired and/or wireless, (not shown) and a transmitter, e.g. wired and/or wireless, (not shown), e.g., for communication with the computer system 1 and/or the spacecraft 100.

The embodiments herein, in particular as discussed below, may be implemented through a **processing circuitry 911** comprised in the receiving device 60, and as depicted in Fig. 9, e.g., together with computer program code for performing the functions and actions of the embodiments herein. The processing circuitry 911 may comprise any suitable processing means such as the one or more processing units, e.g., the first processing unit 31 and/or the second processing unit 32. The processing circuitry 911 may be or may comprise a processor. Any one or more embodiments herein, such as the method above, may be performed by the processing circuitry 911.

The receiving device 60 is configured to handle the nominal software execution signature 50 and data produced by the software application 12 executed by the computer system 1 comprised in the spacecraft 100. The receiving device 60 is configured to receive from the computer system 1, the nominal software execution signature 50. The nominal software execution signature 50 is indicative of whether or not the software application 12 has executed a set of software activities as intended. The nominal software execution signature 50 is established based on the one or more first signatures 51. The one or more first signatures 51 comprises the one or more software activity signatures. Each respective signature is obtained with proviso that a corresponding software activity of the set of software activities has successfully completed with respect to the success criterion. The receiving device 60 is configured to receive from the computer system 1, data at least partly produced by the set of software activities. The receiving device 60 is configured to validate the received data based on the nominal software execution signature 50.

The nominal software execution signature 50 may have been established by the computer system 1, e.g., as described in Action 202 or in any of the above-mentioned embodiments.

The receiving device 60 may further comprise respective a **memory 912** comprising one or more memory units. The memory 912 comprises instructions executable by the processing circuitry 911 in the receiving device 60. The memory 912 may be used to store instructions, data, configurations, references, and applications to perform the methods herein when being executed in the receiving device 60.

The receiving device 60 may comprise the processing circuitry 911 and the memory 912. Said memory 912 may comprise instructions executable by said processing circuitry 911 whereby said receiving device 60 is operative to perform any of the methods herein.

In some embodiments, a **computer program 913** which may also be referred to as a computer program product, may comprise instructions, which, when executed on the receiving device 60 such as the processing circuitry 911, may cause the receiving device 60 or a processor thereof, such as the processing circuitry 911, to carry out the method according to any of the above-mentioned embodiments.

In some embodiments, **a computer-readable storage medium 914** is comprised in the receiving device 60. The storage medium 914 may have stored thereon a computer program, e.g., the program 913, which comprises instructions which, when executed by the receiving device 60 such as the processing circuitry 911, cause the receiving device 60 such as the processing circuitry 911 to carry out the method according to any of the above-mentioned embodiments.

The processing circuitry 911 may be configured to execute program code, e.g., the program 913, stored in memory such as the memory 912 and/or storage medium 914, which may include one or several types of memory such as read-only memory (ROM), random-access memory (RAM), cache memory, flash memory devices, optical storage devices, etc. Program code stored in memory includes program instructions for executing protocols and/or actions for the spacecraft 100.

Any of the entities of the computer system 1 and/or the spacecraft 100 and/or the receiving device 50 may be understood herein as any suitable hardware component. As used herein, the expression "in some embodiments" has been used to indicate that the features of the embodiment described may be combined with any other embodiment or example disclosed herein. When using the word "comprise" or "comprising", it shall be interpreted as non- limiting, i.e., meaning "consist at least of". The embodiments herein are not limited to the above-described preferred embodiments. Various alternatives, modifications and equivalents may be used. Therefore, the above embodiments should not be taken as limiting the scope of the invention.

## Claims

1. A method performed by a computer system (1) comprised in a spacecraft (100) for handling a nominal software execution signature (50) and data produced by a software application (12) executed by the computer system (1), the method comprising:
- establishing (202) the nominal software execution signature (50), wherein the nominal software execution signature (50) is indicative of whether or not the software application (12) has executed a set of software activities as intended,
- wherein establishing (202) the nominal software execution signature (50) comprises obtaining one or more first signatures (51), and establishing the nominal software execution signature (50) based on the one or more first signatures (51),
- wherein obtaining the one or more first signatures (51) comprises:
∘ obtaining one or more software activity signatures (51, 512), wherein each respective software activity signature (51, 512) is obtained with proviso that a corresponding software activity of the set of software activities has successfully completed with respect to a success criterion; and
- providing (203) to a receiving device (60), the nominal software execution signature (50) and data at least partly produced by the set of software activities.

2. The method according to claim 1, wherein obtaining the one or more first signatures (51) further comprises at least one of:
- obtaining a predefined initial signature (51, 500), wherein the initial signature (51, 500) is predefined and/or generated to be associated with any one or more of: the software application (12), a distinct execution of the software application (12), a user, or the computer system (1); and
- obtaining a signature associated with a user of the computer system (1).

3. The method according to any of the preceding claims, wherein establishing (202) the nominal software execution signature (50) comprises:
- establishing a preliminary software execution signature (51, 510) based on the one or more activity signatures, and
- establishing the nominal software execution signature (50) based on the preliminary software execution signature (51, 510) and at least one of:
∘ an initial signature (51, 500) associated with any one or more of: the software application (12), a distinct execution of the software application (12), a user, or the computer system (1), and
∘ a user signature (51, 511) associated with the user.

4. The method according to any of the proceeding claims, wherein establishing (202) the nominal software execution signature (50) is any or both of:
- at least partly dependent of an order of obtaining at least part of the one or more first signatures (51), and
- at least partly independent of an order of obtaining at least part of the one or more first signatures (51), preferably wherein establishing the nominal software execution signature (50) is based on a position-independent checksum.

5. The method according to any of the proceeding claims, wherein the success criterion comprises a condition that a corresponding software activity shall be completed before a set completion time and/or within a set time period.

6. The method according to any of the proceeding claims, wherein the one or more software activity signatures (51, 512) are provided by the software application (12) to a software monitor unit (40) arranged to monitor the software application (12), and wherein establishing (202) the nominal software execution signature (50) is performed by the monitor unit (40).

7. A computer system (1) comprised in a spacecraft (100) configured to handle a nominal software execution signature (50) and data produced by a software application (12) executed by the computer system (1), the computer system (1) being configured to:
- establish the nominal software execution signature (50), wherein the nominal software execution signature (50) is indicative of whether or not the software application (12) has executed a set of software activities as intended,
- wherein establishing the nominal software execution signature (50) comprises obtaining one or more first signatures (51), and establishing the nominal software execution signature (50) based on the one or more first signatures (51), wherein obtaining the one or more first signatures (51) comprises:
∘ obtaining one or more software activity signatures (51, 512), wherein each respective software activity signature is obtained with proviso that a corresponding software activity of the set of software activities has successfully completed with respect to a success criterion; and
- provide to a receiving device (60), the nominal software execution signature (50) and data at least partly produced by the set of software activities.

8. The computer system (1) of claim 7, configured to perform the method according to any of claims 1-6.

9. A spacecraft (100) comprising the computer system (1) according to claim 7 or 8.

10. A method performed by a receiving device (60) for handling a nominal software execution signature (50) and data produced by a software application (12) executed by a computer system (1) comprised in a spacecraft (100), the method comprising:
- receiving (301) from the computer system (1), the nominal software execution signature (50), wherein the nominal software execution signature (50) is indicative of whether or not the software application (12) has executed a set of software activities as intended, wherein the nominal software execution signature (50) is established based on one or more first signatures (51), which one or more first signatures (51) comprises one or more software activity signatures (51, 512), wherein each respective software activity signature (51, 512) is obtained with proviso that a corresponding software activity of the set of software activities has successfully completed with respect to a success criterion,
- receiving (302) from the computer system (1), data at least partly produced by the set of software activities, and
- validating (303) the received data based on the nominal software execution signature (50).

11. A receiving device (60) configured to handle a nominal software execution signature (50) and data produced by a software application (12) executed by a computer system (1) comprised in a spacecraft (100), the receiving device (60) being configured to:
- receive from the computer system (1), the nominal software execution signature (50), wherein the nominal software execution signature (50) is indicative of whether or not the software application (12) has executed a set of software activities as intended, wherein the nominal software execution signature (50) is established based on one or more first signatures (51), which one or more first signatures (51) comprises one or more software activity signatures (51, 512), wherein each respective software activity signature (51, 512) is obtained with proviso that a corresponding software activity of the set of software activities has successfully completed with respect to a success criterion,
- receive from the computer system (1), data at least partly produced by the set of software activities, and
- validate the received data based on the nominal software execution signature (50).

12. A computer program (813, 913) comprising instructions which, when the program is executed by a processing circuitry (811, 911), cause the processing circuitry to carry out the method of any of claims 1-6 and/or the method of claim 10.

13. A computer-readable storage medium (814, 914) comprising instructions which, when executed by a processing circuitry (811, 911), cause the processing circuitry to carry out the method of any of claims 1-6 and/or the method of claim 10
